# EUROPEAN PATENT SPECIFICATION

(11) **EP 1 721 927 B1**
(45) Date of publication and mention of the grant of the patent: **16.06.2010**
(21) Application number: 05719522.4
(22) Date of filing: 25.02.2005
(51) Int. Cl.: C08J 5/18, C08K 5/10, C08L 67/04, C08L 101/16

(54) **BIODEGRADABLE WRAP FILM**
BIOLOGISCH ABBAUBARE WICKELFOLIE
FILM D'EMBALLAGE BIODEGRADABLE

(30) Priority: 26.02.2004 JP 2004052413
(43) Date of publication of application: 15.11.2006
(73) Proprietor: MITSUBISHI PLASTICS, INC., Chiyoda-ku, Tokyo 100-0005 (JP)
(72) Inventor: NEMOTO, Tomoyuki c/o Nagahama Plant Mitsubishi Plastics Inc., Nagahama-shi, Shiga 5268660 (JP); TAKAGI, Jun c/o Nagahama Plant Mitsubishi Plastics Inc., Nagahama-shi, Shiga 5268660 (JP)
(74) Representative: Gille Hrabal Struck Neidlein Prop Roos
(86) International application number: PCT/JP2005/003121
(87) International publication number: WO 2005/082981

(56) References cited:
- EP-A- 1 245 616
- WO-A1-03/006550
- JP-A- 8 198 955
- JP-A- 9 025 345
- JP-A- 11 302 521
- JP-A- 2002 146 170
- JP-A- 2002 249 603
- JP-A- 2003 012 834
- JP-A- 2004 292 625
- DATABASE WPI Week 200409 Thomson Scientific, London, GB; AN 2004-084837 XP002486688 & JP 2003 136592 A (ASAHI CHEM IND CO LTD) 14 May 2003 (2003-05-14)
- DATABASE WPI Week 200175 Thomson Scientific, London, GB; AN 2001-650888 XP002486689 & JP 2001 226572 A (MITSUBISHI PLASTICS IND LTD) 21 August 2001 (2001-08-21)

## Description

### [Technical Field]

The present invention relates to a biodegradable film for use in wrapping application; in particular, it relates to a biodegradable wrap film suitable for use as a small roll wrap film for household use.

### [Technical Background]

Plastic has now entered many fields of life and industry, and the amount produced annually reaches as much as approximately 100 million tons for the entire world. However, on another front, the problem of treatment of used plastic has been growing proportionally to the amount produced.

Conventionally, the majority of used plastic has been disposed of by land filling and the like. However, with plastic being generally stable over a long period in a natural world, moreover, having a low bulk density, various problems occur, such as landfills becoming more and more short-lived and, on another front, natural landscapes and living environments for wild plants being lost.

In recent years, with environmental problems on the rise, emphasis is on the efficient use of exhaustible resources, such that the focus is on biodegradable resins that do not have a detrimental effect on the natural environment; that is to say, a biodegradable resin, the disintegration/degradation of which gradually proceeds in the soil or in water via hydrolysis or generation and degradation, which, in the end, becomes a harmless degradation product by the action of microorganisms.

Examples of biodegradable resins, the practical application of which has begun, include lactic acid resins, aliphatic polyesters, modified polyvinyl alcohols, cellulose ester compounds, starch modified compounds, and blends thereof. Among them, since lactic acid resins having lactic acid obtained by fermentation of starch as sources can be mass produced by chemical engineering and, moreover, has excellent transparency/stiffness/heat resistance, it is particularly drawing attention as an alternative material to polystyrene and polyethylene terephthalate.

Meanwhile, in prior art, the main material of a small roll wrap film for household use was generally stretched polychlorinated vinylidene resin and extrusion cast polyethylene resin, plasticized polyvinyl chloride resin, poly 4-methylpentene-1 resin, and the like. However, recently, research using biodegradable resins, such as polylactic acid, as an alternative material to these chloride vinylidene resins has progressed, and a variety of proposals have been made.

For instance, to provide a wrap film that is biodegradable and having excellent ability to be cut by a saw blade, handling properties, microwave oven heat resistance, adhesiveness to container, and gas barrier properties, Japanese Patent Application Laid-Open No. 2000-185381 proposes a wrap film comprising an adhesive layer provided on at least one face of a base material layer consisting mainly of a polymer having polylactic acid as the main component. However, a film prepared in this way has the problem that it is too hard in the range of temperature for practical use, and, for instance, when wrapping a container, does not line the container well, such that the use thereof in the present application is difficult.

To provide a film for wrapping use that is transparent, heat resistant, and soft and, furthermore, having excellent adhesiveness onto a container or the like without a plasticizer or an adhesiveness-providing agent bleeding out onto the surface, Japanese Patent Application Laid-Open No. 2001-49098 proposes a lactic acid resin composition having adhesive properties, obtained by mixing 100 parts by mass of lactic acid resin and 1 - 100 parts by mass of an adhesiveness-providing agent comprising one species or a mixture of two or more species selected from the group comprising polyester elastomers, polyamide elastomers, rhodine derivatives, and terpene resins. However, a film prepared from such a lactic acid resin composition lacks resiliency, the film being too soft in the range of temperature for practical use, such that problems sometimes occur in the ability to be cut and wrapping suitability, and the use thereof is difficult in the present application.

To provide a biodegradable wrap film satisfying a variety of properties that are required when wrapping (ability to be pulled out, ability to be cut, stretching and handling properties, adhesive fixing properties, heat resistance, and the like) and easy to use, Japanese Patent Application Laid-Open No. 2001-106806 proposes a heat-resistant adhesive wrap film having a modulus of elasticity in tension of 15 to 180 kg/mm², a relationship between the shrink rate X (%)and the thermal shrink stress Y (g/mm²) upon heating at 100°C within the range of any among (Formula 1) 0 ≤ X ≤ 45, 0 ≤ Y ≤ 5, (Formula 2) 0 ≤ X ≤ 2, 55 ≤ Y ≤ 500, Y ≤ (1500 - 20X)/3, and (Formula 3) 2 ≤ X ≤ 22.5, 350 < Y ≤ 500, Y ≤ (1500 - 20X)/3, furthermore, having a heat resistance to 120°C or higher and an adhesion workload of 5 to 50 g·cm/25 cm² by adding a specific liquid additive to a lactic acid aliphatic polyester having a crystal melting point of 120°C to 250°C; Japanese Patent Application Laid-Open No. 2000-26623 proposes a heat-resistant adhesive wrap film having an elongation modulus of 20 to 150 kg/mm², a relationship between the shrink rate X% and the thermal shrink stress Y g/mm² upon heating at 100°C within the range of Y ≤ (1400-20X)/3, 2 ≤ X ≤ 45, and 5 ≤ Y ≤ 350, furthermore, having a heat resistance to 120°C or higher and an adhesion workload of 5 to 30 g·cm/25 cm² by adding a specific liquid additive to a lactic acid aliphatic polyester having a crystal melting point of 120°C to 250°C and stretching. Although all these yield wrap films with excellent ability to be cut and ability to be pulled out, as a recovery behavior against deformation occurs instantaneously, for instance, when the film is wrapped around a container or the like, the film spreads out without lining the shape of the container, the use thereof is still difficult for the present application.

To provide a biodegradable film wherein a plasticizer providing softness stays stably in a biodegradable resin to maintain softness even under severe conditions, such as during high temperature exposures, Japanese Patent Application Laid-Open No. 2002-210886 proposes a softening biodegradable stretch film having formed, on both faces of a biodegradable resin film containing a plasticizer, a thin film layer suppressing the scattering and exudation of the plasticizer. However, with this film, the thin film layer suppressing the scattering and exudation of plasticizer on both faces of the film being acrylic, it cannot be made into a biodegradable film.

### [Disclosure of the Invention]

### [Problems to Be Solved by the Invention]

Contained in a cardboard box provided with a cutter blade is the form in which a small roll wrap film for household use is generally used. When wrapping, generally the wrap film is pulled out from the cardboard box, pressed against the cutter blade provided on the cardboard box to open holes on the film as a perforation line, which tears the film, this tear is propagated in the width direction to cut the film, then, for instance, wrapping so as to stick the edges of the film to the container while covering the food and the like piled up on the container (overwrapping).

In so doing, if the film is too soft, sometimes the film cannot be torn adequately in the width direction, becoming stretched or torn in an oblique direction.

In addition, since wrap films for household use are also used for conservation of food in refrigerators and freezers, and under microwave oven heat, there is the need for low temperature suitability and high temperature suitability. In particular, when heating with a microwave oven, the film is sometimes heated to 100°C or higher, if the film has no heat resistance, during microwave oven heating, troubles arise, such as the film deforms considerably and adheres excessively to the container or the food in the container, the film melts, opening a hole, and the like.

Therefore, a small roll wrap film for household use is obviously required to have transparency, but also cutting suitability when pulling out from the cardboard box and cutting, wrapping suitability when wrapping, and heat resistance for tolerating microwave oven heat.

Consequently, the present invention provides a biodegradable wrap film, which, in addition to biodegradability originally possessed by the lactic acid resin, is simultaneously provided with cutting suitability, wrapping suitability, and heat resistance, which are characteristic of a wrap film for household use.

### [Means to Solve the Problems]

In order to solve the problems considered, the biodegradable wrap film of the present invention is a biodegradable wrap film, comprising, as the main component, a lactic acid resin composition comprising a plasticizer and a poly(DL-lactic acid) in which the proportion of L--isomer and D-isomer is 88:12 to 85:15 or 0:100 to 15:85, comprising, the lactic acid resin composition with a value of storage modulus at 40°C in the range of 100 MPa to 3 GPa as measured at a frequency of 10 Hz and a distortion of 0.1% by the dynamic viscoelasticity testing method from Method A of JIS K-7198 (corresponding to ISO 6721-4; Method A of JIS K-7198 defined on 1 November 1991 is currently replaced by JIS K-7244-4 defined on 20 October 1999), a value of storage modulus at 100°C in the range of 30 MPa to 500 MPa, and a peak value of loss tangent (tan δ) in the range of 0.1 to 0.8.

With the above-mentioned physical properties, a biodegradable wrap film is provided with heat resistance for tolerating microwave oven heat, as well as resiliency and softness, and stretch and tensile strengths suitable for application as wrap film for household use, it therefore becomes a biodegradable wrap film simultaneously provided with cutting suitability, wrapping suitability, and heat resistance, which are demanded for a wrap film for household use.
Furthermore, from the aspect of wrapping suitability at normal temperature, the value of loss tangent (tan δ) at 20°C is preferably 0.5 or less, and in particular in the range of 0.1 to 0.5.

In addition, the biodegradable wrap film of the present invention is preferably provided with a prescribed or superior degree of crystallinity. That is to say, a difference (ΔHm - ΔHc) of 10 J/g or more between ΔHm, the heat of melting required to melt the crystals completely when heating the film according to JIS K-7121 (corresponding to ISO 3146) at a heating rate of 10°C/minute using a differential scanning calorimeter, and ΔHc, the heat of crystallization produced concomitantly with crystallization during the heating, is preferred. If ΔHm - ΔHc is 10 J/g or more, the film reaches the intended relative crystallinity and is provided with even more desirable wrapping suitability and heat resistance.

The biodegradable wrap film of the present invention can be prepared with a lactic acid resin composition containing a lactic acid resin and a plasticizer as the main component, and in such a case, a lactic acid resin composition, containing lactic acid resins and plasticizer at proportion by mass of 60:40 to 99:1, is preferred. Furthermore, in so doing, under the conditions for preparing the biodegradable wrap film provided with the above-mentioned physical properties, if a lactic acid resin having a high degree of crystallinity, such as a homopolymer consisting of L-lactic acid, is employed as a source material, the plasticizer bleeds out easily. It is therefore preferable to use a lactic acid resin having a lower degree of crystallinity compared to a homopolymer comprising L-lactic acid as a source material.

Even in cases that are slightly outside the upper limit values and the lower limit values of numerical value ranges specified by the present invention, there is the possibility that [the film] is provided with a similar action effect to cases within the numerical value range; such cases are also included within the scope of the present invention.

In addition, in the present invention, "having as main component" means this component (if there are two components or more, the total thereof) is a component that occupies 50% by mass, in particular 70% by mass or more, within the composition.

### [Brief Description of the Drawings]

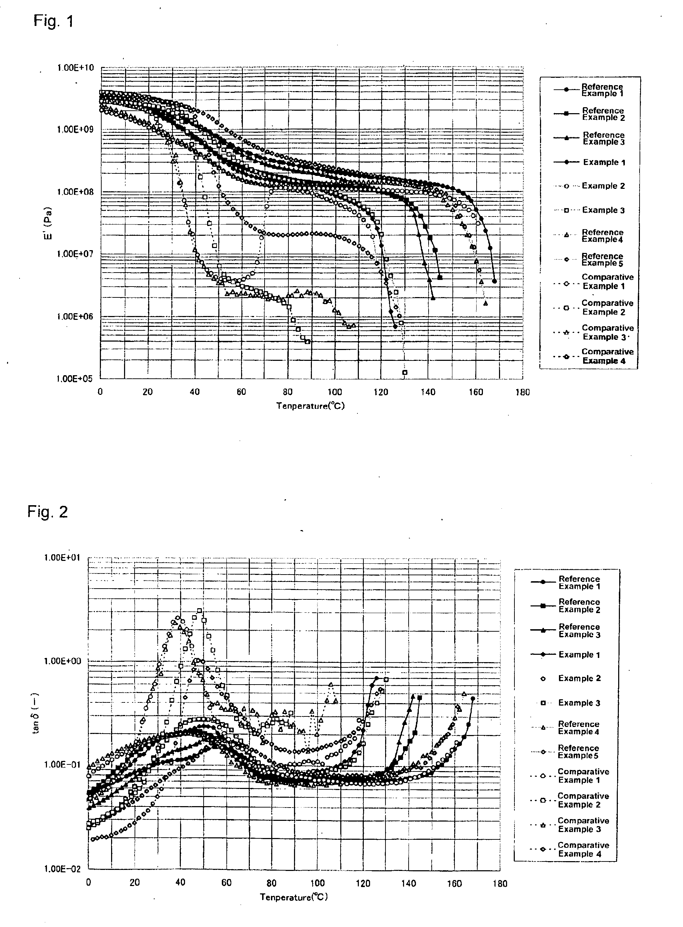

Fig. 1 is a graph showing dynamic storage modulus for the examples and the comparative examples.
Fig. 2 is a graph showing loss tangent (tan δ) for the examples and the comparative examples.

### [Modes for Carrying Out the Invention]

In the following, embodiments of the present invention will be described; however, the scope of the present invention is not limited to the embodiments described below.
The biodegradable wrap film, according to one embodiment of the present invention, is a biodegradable wrap film comprising a lactic acid resin composition as the main component, wherein
A-1: the value of storage modulus at 40°C is in a range of 100 MPa to 3 GPa, as measured at a frequency of 10 Hz and a distortion of 0.1% by the dynamic viscoelasticity testing method in accordance with Method A of JIS K-7198,
A-2: the value of storage modulus at 100°C is in the range of 30 MPa to 500 MPa, and
B-1: the peak value of loss tangent (tan δ) is in the range of 0.1 to 0.8.
Regarding the value of storage modulus, as mentioned above, provision of the following conditions (A-1 to 2) is important; furthermore, provision of the conditions (A-3 to 5) is preferred.

### (A-1)

If the value of storage modulus at 40°C is 100 MPa or higher, as measured at a frequency of 10 Hz and a distortion of 0.1% by the dynamic viscoelasticity testing method described in Method A of JIS K-7198 (corresponding to IS06721-4), the wrap film is provided with an adequate resiliency, such that when cutting a film, it can be properly torn in the width direction. In addition, since the stress against deformation is not excessively small, when overwrapping a container or the like, the film can adequately wrap the container without stretching locally. On the other hand, if the value of storage modulus at 40°C is 3 GPa or lower, the film is not excessively rigid and stretches to a suitable extent, such that it can wrap adequately around the shape of a container or the like.

From such viewpoints, 200 MPa or higher is more preferred for this value, and 300 MPa or higher is particularly preferred. In addition, 1000 MPa or lower is more preferred as the upper limit value, and 900 MPa or lower is particularly preferred.

### (A-2)

If the value of storage modulus at 100°C is 30 MPa or higher, as measured at a frequency of 10 Hz and a distortion of 0.1% by the dynamic viscoelasticity testing method described in Method A of JIS K-7198, when heating with a microwave oven, the film does not soften excessively by being heated and does not stick excessively to the container or food; furthermore, no hole opens by melting of the film per se. On the other hand, if the value of storage modulus at 100°C is 500 MPa or lower, as the storage modulus at ordinary temperature is not excessively high, wrapping suitability at ordinary temperature does not constitute a problem, such as difficulty in stretching or inability to wrap adequately around the shape of the container or the like, when wrapping at ordinary temperature.

From such viewpoints, 50 MPa or higher is more preferred for this value, and in particular, 60 MPa or higher is preferred. In addition, 400 MPa or lower is more preferred as the upper limit value, and in particular, 300 MPa or lower is preferred.

### (A-3)

A value of storage modulus at 20°C of 1 GPa to 4 GPa, as measured at a frequency of 10 Hz and a distortion of 0.1% by the dynamic viscoelasticity testing method described in Method A of JIS K-7198, is preferred. This value is an indicator that mainly affects the resiliency of the film. Soft films are mainly divided into small roll wrap films for household use and wrapping films for commercial use; in the former case, if too soft at room temperature (in the neighborhood of 20°C), the film sometimes cannot be torn adequately in the width direction with a saw blade, stretches, or is torn in an oblique direction. It therefore requires a suitable rigidity (resiliency) at room temperature (in the neighborhood of 20°C). If the value of storage modulus at 20°C is within the aforementioned range, the film is not excessively rigid and stretches to a suitable extent, such that it can wrap adequately around the shape of a container or the like.

On the other hand, a wrapping film for commercial use requires softness at room temperature (in the neighborhood of 20°C); therefore, the storage modulus at 20°C for a wrapping film for commercial use is generally 200 MPa to 800 MPa.

### (A-4)

A value of storage modulus at 60°C of 100 MPa to 800 MPa is preferred, as measured at a frequency of 10 Hz and a distortion of 0.1% by the dynamic viscoelasticity testing method described in Method A of JIS K-7198. As this value is an indicator that affects mainly the stiffness and resiliency of a film and the shape maintenance of a film, if the value of storage modulus at 60°C is 100 MPa to 800 MPa, the film does not soften excessively, and a phenomenon such as hanging under its own weight does not occur, whereby the film does not excessibely adhere to container and food. From such viewpoints, 110 MPa or higher is more preferred for this value, and in particular, 150 MPa or higher is preferred. In addition, 400 MPa or lower is more preferred, and in particular, 300 MPa or lower is preferred.

### (A-5)

A value of storage modulus at 120°C of 1 MPa or higher is preferred, as measured at a frequency of 10 Hz and a distortion of 0.1% by the dynamic viscoelasticity testing method described in Method A of JIS K-7198. If the storage modulus is 1 MPa or lower, the film softens excessively, and in case a container or the like is wrapped, the film sometimes fixes to the container if left in a still state. If the storage modulus at 120°C is 1 MPa or higher, the film does not soften excessively, and even in case a container wrapped with the film and containing, for instance, an oil product is warmed in a microwave oven, the film does not attach to the container.

Regarding loss tangent, as described above, provision of the following condition (B-1) is important; furthermore, provision of condition (B-2) is preferred.

### (B-1)

The peak value of loss tangent (tan δ) must be in the range of 0.1 to 0.8, as measured at a frequency of 10 Hz by the dynamic viscoelasticity testing method from Method A of JIS K-7198.

The peak value of loss tangent (tan δ) is a physical property for indicating a delay in deformation when a force is applied and one of the parameters for indicating a stress relaxation behavior. That is to say, if the value of loss tangent is small, the stress relaxation is rapid, and the recovery behavior against deformation of the film occurs instantaneously. Conversely, if the value of loss tangent is large, stress relaxation is slow, and the recovery behavior against deformation of the film is slow.

If the considered peak value of the wrap film of the present embodiment is 0.1 or more, the recovery behavior against deformation of the film does not occur instantaneously, such that, for instance, during stretching of the film for overlapping, the film does not go back at the instant of removing the stretching force, whereby the film can be wrapped neatly without wrinkles. On the other hand, if the value is 0.8 or less, since the recovery behavior is not excessively slow, the film does not demonstrate a plastic deformation as long as it is used normally.

### (B-2)

A value of loss tangent (tan δ) at 20°C in a range of 0.5 or less, as measured at a frequency of 10 Hz by the dynamic viscoelasticity testing method from Method A of JIS K-7198, is preferred. This value is an indicator affecting mainly the wrapping suitability of the film. The average ambient temperature in a Japanese household is often in the neighborhood of 20°C, and if the value of loss tangent at 20°C is 0.5 or less, the film can be wrapped neatly without wrinkles.
The biodegradable wrap film of the present embodiment is preferably further provided with the following conditions (C-1 and D-1).

### (C-1)

The difference (ΔHm - ΔHc) between the heat of crystallization ΔHc and the heat of melting ΔHm of the lactic acid resin component in the film, specifically, the difference (ΔHm- ΔHc) between ΔHm, the heat of melting required to melt the crystals completely when heating the film according to JIS K-7121 (corresponding to ISO 3146) at a heating rate of 10°C/minute using a differential scanning calorimeter, and ΔHc, the heat of crystallization produced concomitantly with crystallization during the heating, is preferably 10 J/g or more, in particular 12 J/g or more, and more particularly 15 J/g or more.

If ΔHm - ΔHc is 10 J/g or more, the biodegradable film reaches the intended relative crystallinity and is provided with the desirable wrapping suitability and heat resistance.

ΔHm is the heat of crystal melting required to melt the crystals completely when heating the film at a prescribed heating rate, and ΔHc is the heat produced during crystallization occurring in the heating process when the film is subjected to a first order heating at a prescribed heating rate. ΔHm - ΔHc indicates the degree of crystallinity of the lactic acid resin in the film, and a larger ΔHm - ΔHc indicates that the degree of crystallinity of the lactic acid resin inside is high.

### (D-1)

At a stretch ratio in a range of up to 200%, a tensile stress ratio (σMD/TD) of the TD direction (perpendicular to the MD direction) with respect to the MD direction (pull direction) of the wrap film in a range of 0.4 to 2.5 is preferred, and a range of 0.5 to 2.0 is better. If within the range of 0.4 to 2.5, even when wrapping an angular object with a biodegradable film, wrinkles do not form readily near the corners.

### (Composition of the Biodegradable Wrap Film of the Present Embodiment)

The biodegradable wrap film of the present embodiment contains as the main component a lactic acid resin composition containing a lactic acid resin and a plasticizer. As necessary, other biodegradable resin components can be further contained as the main component.

### (Lactic Acid Resin)

Any among poly(L-lactic acid), a homopolymer of which the structural unit comprises L-lactic acid, poly(D-lactic acid), a homopolymer of which the structural unit comprises D-lactic acid, and poly(DL-lactic acid), a copolymer of which the structural unit comprises both L-lactic acid and D-lactic acid, or a polymer blend thereof, can be used as the lactic acid resin used in the present embodiment.

However, it has been determined that, if a highly crystalline polymer, such as poly(L-lactic acid), is used as the source material under the conditions where the biodegradable wrap film of the present embodiment is manufactured, bleed-out of the plasticizer occurs readily. Therefore, lactic acid resins that are at least less crystalline than poly(L-lactic acid) are preferred. Examples are poly(DL-lactic acid), or a polymer blend of poly(DL-lactic acid) and poly(L-lactic acid) or poly(D-lactic acid), and the like.

Regarding the DL constitution ratio in poly (DL-lactic acid), for instance, L-isomer:D-isomer = 88:12 to 85:15 or L-isomer:D-isomer = 0:100 to 15:85 is preferred; more preferable from the view point of plasticizer bleed- out is a composition that is less crystalline than at least the L-isomer:D-isomer = 88:12 used in the following Examples 4 to 6, namely, L-isomer:D-isomer = 88:12 to 85:15, or L-isomer:D-isomer = 12:88 to 15:85.
Although a homopolymer is ideally a polymer comprising 100% L-lactic acid or D-lactic acid, as there is the possibility that a different lactic acid is incorporated unavoidably during polymerization, in the present invention, a polymer containing 98% or more L-lactic acid or D-lactic acid is referred to as a homopolymer.

In addition, the lactic acid resin used in the present embodiment may be a copolymer of any lactic acid among L-lactic acid, D-lactic acid, and DL-lactic acid, and any among α-hydroxycarboxylic acid, aliphatic diol, and aliphatic dicarboxylic acid.

In this case, bifunctional aliphatic hydroxycarboxylic acids, such as glycolic acid, 3-hydroxybutyric acid, 4-hydroxybutyric acid, 2-hydroxy-n-butyric acid, 2-hydroxy-3,3-dimethyl butyric acid, 2-hydroxy-3-methyl butyric acid, 2-methyl lactic acid, and 2-hydroxycaproic acid, and lactones, such as caprolactone, butyrolactone, and valerolactone, may be cited as the α-hydroxycarboxylic acid.

In addition, ethylene glycol, 1,4-butanediol, and 1,4-cyclohexanedimethanol may be cited as aliphatic diols.

In addition, succinic acid, adipic acid, suberic acid, sebacic acid, dodecane dioic acid, and the like may be cited as aliphatic dicarboxylic acid.

Regarding lactic acid resin polymerization method, condensation polymerization method, ring-opening polymerization method, and other well-known polymerization methods can be adopted.

For instance, with the condensation polymerization method, a lactic acid resin with an arbitrary composition can be obtained by direct dehydration condensation polymerization of L-lactic acid or D-lactic acid, or a mixture thereof.

With the ring-opening polymerization method, a polylactic acid polymer can be obtained by ring-opening lactide, which is a cyclic dimer of lactic acid, while using a polymerization regulator or the like as necessary and using a chosen catalyst. In this case, L-lactide, which is a dimer of L-lactic acid, D-lactide, which is a dimer of D-lactic acid, or DL-lactide, comprising L-lactic acid and D-lactic acid, can be used as the lactide, and by mixing and polymerizing these as necessary, a lactic acid resin with an arbitrary composition and crystalline character can be obtained.

In order to meet a need such as increasing heat resistance, a non-aliphatic dicarboxylic acid, such as terephthalic acid, a non-aliphatic diol, such as ethylene oxide adduct of bisphenol A, or the like, may be added to the lactic acid resin used in the present embodiment as a small amount co-polymerization component.

In addition, a small amount of chain extender, for instance, diisocyanate compound, epoxy compound, acid anhydride, or the like, may be added for the purpose of increasing the molecular weight.

The preferred range for the mass-average molecular weight of the lactic acid resin used in the present embodiment is from 50,000 to 400,000, and more preferably from 100,000 to 250,000. If the molecular weight is 50,000 or above, suitable practical physical properties can be expected, and if 400,000 or lower, there is also no such problem as poor forming processability due to molten viscosity being too high.

Regarding representative lactic acid resins, the LACEA series manufactured by Mitsui Chemicals, Nature Works series manufactured by Cargill Dow, and the like can be cited.

### (Resin Components Other than Lactic Acid Resin)

As described above, a biodegradable aliphatic polyester, a biodegradable aromatic polyester, or a biodegradable aromatic aliphatic polyester or the like may be polymer-blended as necessary in the lactic acid resin composition used in the biodegradable wrap film of the present embodiment.

### (Biodegradable Aliphatic Polyester)

Regarding biodegradable aliphatic polyester other than lactic acid resin, for instance, aliphatic polyester obtained by condensation of aliphatic diol and aliphatic dicarboxylic acid, aliphatic polyester obtained by ring-opening polymerization of cyclic lactones, synthetic aliphatic polyester, and the like, can be cited.

For the above-mentioned "aliphatic polyester obtained by condensation of aliphatic diol and aliphatic dicarboxylic acid," an aliphatic polyester obtained by condensation polymerization of any among ethylene glycol, 1,4-butanediol, and 1,4-cyclohexanedimethanol, which are aliphatic diols, or a mixture comprising the combination of two or more species among these, and any among succinic acid, adipic acid, suberic acid, sebacic acid, dodecane dioic acid, and the like, which are aliphatic dicarboxylic acids, or a mixture comprising the combination of two or more species among these, can be used. The use of a polymer obtained by increasing the molecular weight as necessary with an isocyanate compound or the like is also possible.

The preferred range for the mass-average molecular weight of this aliphatic polyester is from 50,000 to 400,000 and more preferably from 100,000 to 250,000.

Regarding specific examples, the BIONOLLE series manufactured by Showa High Polymer, EnPol manufactured by Ire chemical, and the like may be cited.

For the above-mentioned "aliphatic polyester obtained by ring-opening polymerization of cyclic lactones," a polymer obtained by ring-opening polymerization of any among ε-caprolactone, δ-valerolactone, β-methyl-δ-valerolactone, and the like, which are cyclic monomers, or a component comprising a combination of two or more species among these, can be used.

The preferred range for the mass-average molecular weight of this aliphatic polyester is from 50,000 to 400,000 and more preferably from 100,000 to 250,000.
Regarding specific examples, the Celgreen series manufactured by Daicel Chemical Industries may be cited.

For the above-mentioned "synthetic aliphatic polyester," a copolymer of cyclic acid anhydride and oxiranes, or the like, for instance, succinic anhydride and ethylene oxide, propylene oxide, or the like, can be used.

The preferred range for the mass-average molecular weight of this aliphatic polyester is from 50,000 to 400,000 and more preferably from 100,000 to 250,000.

### (Biodegradable Aromatic Polyester)

A biodegradable aromatic polyester comprising an aromatic dicarboxylic acid component, an aliphatic dicarboxylic acid component, and an aliphatic diol component, can be used as biodegradable aromatic polyester.

In this case, regarding aromatic dicarboxylic acid component, for instance, isophthalic acid, terephthalic acid, 2,6-naphthalene dicarboxylic acid, and the like may be cited. Regarding aliphatic dicarboxylic acid component, for instance, succinic acid, adipic acid, suberic acid, sebacic acid, dodecane dioic acid, and the like may be cited. Regarding "aliphatic diol," for instance, ethylene glycol, 1,4-butanediol, 1,4-cyclohexanedimethanol, and the like may be cited.

Respectively, two or more species of aromatic dicarboxylic acid component, aliphatic dicarboxylic acid component, or aliphatic diol component, can also be used.

In the present embodiment, the most suitably used aromatic dicarboxylic acid component is terephthalic acid, the aliphatic dicarboxylic acid component is adipic acid, and the aliphatic diol component is 1,4-butanediol.

### (Biodegradable Aromatic Aliphatic Polyester)

Regarding biodegradable aromatic aliphatic polyester, biodegradable aromatic aliphatic polyesters comprising an aromatic dicarboxylic acid component, an aliphatic dicarboxylic acid component, and an aliphatic diol component, can be cited.

Regarding aromatic dicarboxylic acid component, for instance, isophthalic acid, terephthalic acid, 2,6-naphthalene dicarboxylic acid, and the like may be cited. Regarding aliphatic dicarboxylic acid component, for instance, succinic acid, adipic acid, suberic acid, sebacic acid, dodecane dioic acid, and the like may be cited. Regarding aliphatic diol, for instance, ethylene glycol, 1,4-butanediol, 1,4-cyclohexanedimethanol, and the like may be cited. Respectively, two or more species of aromatic dicarboxylic acid component, aliphatic dicarboxylic acid component, and aliphatic diol component can also be used.

Among the above, the most suitably usable aromatic dicarboxylic acid component is terephthalic acid, the aliphatic dicarboxylic acid component is adipic acid, and the aliphatic diol component is 1,4-butanediol.

Although an aliphatic polyester comprising aliphatic dicarboxylic acid and aliphatic diol is known to be biodegradable, in order for biodegradability to manifest in an aromatic aliphatic polyester, the presence of an aliphatic chain between the aromatic rings is necessary. Therefore, the aromatic dicarboxylic acid component of the biodegradable aromatic aliphatic polyester used in the present embodiment is preferably 50 molar % or less.

Regarding representative biodegradable aromatic aliphatic polyester other than lactic acid resin, copolymer of poly butylene adipate and terephthalate (Ecoflex manufactured by BASF), copolymer of tetramethylene adipate and terephthalate (EastarBio manufactured by Eastman Chemicals), and the like, can be cited.

From the viewpoint of the effect of improving impact-resistance and cold resistance, the glass transition temperature (Tg) of the above-mentioned aliphatic polyester, aromatic polyester, and aromatic aliphatic polyester is preferably 0°C or below, and a mixing quantity thereof of 30 % by mass or less is adequate.

### (Plasticizer)

A plasticizer has the function of lowering the glass transition temperature (Tg) and softening lactic acid resins. Regarding plasticizer used in the present embodiment, from the points of view of compatibility with lactic acid resin and biodegradability, a plasticizer comprising one species or a combination of two or more species chosen from among the compounds shown in (A) to (I) below is preferred, and among these, the following (F) is particularly preferred.
(A) H₅C₃(OH)₃-n(OOCCH₃)n (with the proviso that 0 < n ≤ 3)

This is a mono acetate, a diacetate, or a triacetate of glycerin, and a mixture thereof is acceptable, however, n is preferably closest to 3.
(B) Glycerin alkylate (the alkyl group has 2 to 20 carbons, and may have a hydroxyl group residue)

For instance, glycerin tripropionate, glycerin tributylate, and the like, may be cited.
(C) Ethylene glycol alkylate (the alkyl group has 1 to 20 carbons, and may have a hydroxyl group residue).

For instance, ethylene glycol diacetate, and the like, may be cited.
(D) Polyethyleneglycol alkylate with 5 or fewer ethylene repeat units (the alkyl group has 1 to 12 carbons, and may have a hydroxyl group residue).

For instance, diethyleneglycol monoacetate, diethyleneglycol diacetate, and the like, may be cited.
(E) Aliphatic monocarboxylic acid alkyl ester (the alkyl group has 1 to 20 carbons)

For instance, butyl stearate, and the like, may be cited.
(F) Aliphatic dicarboxylic acid alkyl ester (the alkyl group has 1 to 20 carbons, and may have a carboxyl group residue), among which, those with a number average molecular weight of 100 to 2000 is preferred. Specifically, di(2-ethylhexyl)adipate, di(2-ethylhexyl)azelate, and the like, may be cited.
(G) Aliphatic tricarboxylic acid alkyl ester (the alkyl group has 1 to 20 carbons, and may have a carboxyl group residue).

For instance, citric acid trimethyl ester, and the like, may be cited.
(H) Low molecular weight aliphatic polyester with a mass-average molecular weight of 20,000 or below

For instance, a condensate of succinic acid and ethylene glycol/propylene glycol (sold by Dainippon Ink and Chemicals, Incorporated under the product name "POLYCIZER"), and the like, may be cited.

### (I) Natural fats and derivatives thereof

For instance, soybean oil, epoxidized soybean oil, castor oil, wood oil, canola oil, and the like, may be cited.

Regarding the mixing proportion of the lactic acid resin and plasticizer in the above-mentioned lactic acid resin composition, lactic acid resin:plasticizer= 60-99:40-1 by mass ratio is preferred, in particular, 70-90:30-10 is preferred.

If the amount of plasticizer is greater than lactic acid resin:plasticizer= 99:1, the composition can be softened to an extent that is required as a wrap film. On the other hand, if less than lactic acid resin:plasticizer= 60:40, excessively low viscosity at melt extrusion time, or temporal problemproblems, such as bleed-out, do not occur.

In addition to the above lactic acid resin composition, an additive, such as, a heat stabilizer, an antioxidant, an adhesive, an anti-fog agent, a UV absorbent, a light stabilizer, a pigment, a colorant, a lubricant, a nucleating agent, anti-hydrolysis agent, deodorizing agent, and the like, can be formulated, as necessary, into the lactic acid resin composition constituting the above-mentioned biodegradable wrap film, with a range that does not detract from the effects of this invention.

### (Preparation Method)

In the following, a preparation method for the biodegradable wrap film will be described, which is not limited to the preparation method described below.

The biodegradable wrap film according to the present embodiment can be prepared, for instance, by the method of film forming by melt extrusion.

The composition to be used as the film source material may be pre-compounded beforehand using a co-rotating twin screw extruder, a kneader, a Henschel mixer, or the like. After dry blending each source material, the film extruder may be fed directly. Liquid components, such as plasticizer, can be injected from the vent opening of the extruder, using a pump or the like, separately from the solid components.

After the composition to serve as the film source material is melted and extruded, it suffices to perform the treatment of forming the film, for instance, by quenching on a casting drum, and, after film forming, heating for a determined length of time. It is adequate, after film forming, to draw the film vertically using a heated vertical drawing roll, as necessary, or, to draw the film using a tenter, as necessary. Moreover, in addition to the casting method, the inflation method and the drawing method can also be adopted.

In the above-mentioned preparation method, to adjust the physical properties required for the present embodiment, that is to say, the storage modulus at 20°C, 40°C, 60°C, 80°C, 100°C, and 120°C measured at a frequency of 10 Hz and a distortion of 0.1% by the dynamic viscoelasticity testing method, ΔHm - ΔHc, as well as the peak value of loss tangent (tan δ), to the ranges described above, the adjustment can be achieved by combining the composition of the lactic acid resin composition (for instance, the LD ratio), the type of plasticizer, the mixing proportion of the lactic acid resin composition and the plasticizer, and the forming process conditions, in particular, the heating condition subsequent to film forming.

The treatment of heating after film forming is performed by selecting appropriate conditions according to the type of lactic acid resin used, and increasing the degree of crystallinity of the film by this treatment to bring ΔHm - - ΔHc to 10 J/g or more, in particular 20 J/g or more, is desirable.
When a lactic acid resin with a low degree of crystallinity, such as poly(DL-lactic acid), is used as the source material, it is desirable, after film forming, to cure for 6 hours or more at a prescribed temperature. In so doing, curing temperature must be between the glass transition temperature, when heating the film according to JIS K-7121 at a heating rate of 10°C/minute using a differential scanning calorimeter, and the peak temperature of the heat of crystallization produced concomitantly with crystallization during the heating. Curing is preferably by keeping at a temperature that is higher than the glass transition temperature by 30°C or higher and for 12 hours to 24 hours, more preferably at a temperature that is higher than the glass transition temperature by 35°C to 40°C and for 12 hours to 24 hours. That is to say, in the case of a lactic acid resin with a low degree of crystallinity, the degree of crystallinity must be increased by taking time under gentle conditions.

Meanwhile, in the case of a polymer blend of poly(DL-lactic acid) with poly(L-lactic acid) or poly(D-lactic acid), the degree of crystallinity can also be increased by the above curing; however, as the degree of crystallinity is high compared to poly(DL-lactic acid), the degree of crystallinity can be increased to a prescribed range even by a heat treatment at high temperature for a short time. In this case, regarding the heat treatment conditions, for instance, heat treatments at 60°C to 120°C for 1 to 200 seconds, at 70°C to 110°C for 2 to 30 seconds, and at 80°C to 100°C for 3 to 20 seconds, are also possible. In so doing, regarding the heating method, in addition to direct heating, heating method by energy waves, such as radio frequency and ultrasound, can also be also adopted.

In order to increase ΔHm - ΔHc, the draw ratio can be increased to promote orientation-induced crystallization; however, considering the application of wrap film for microwave oven use, increasing the degree of crystallinity by curing or heat treatment is preferred.

In order to adjust the tensile stress ratio (σMD/TD) to the above-mentioned range, take-up rate and blow ratio being important in the inflation method, setting the blow ratio to a range of 1.2 to 5.0 is preferred. In addition, in the casting method, setting the extrusion draw down ratio to 1.0 to 10.0 is preferred. In addition, in the draw method, setting the vertical draw ratio to 1.5 to 5.0 and the horizontal draw ratio to 2.0 to 6.0 is preferred.

### [Examples]

Examples will be shown in the following; however, these do not limit the present invention in any way.

The MD direction of a film means the take-up direction (flow direction), and the TD direction means the direction that is perpendicular to the MD direction (width direction).

Note that the measurement values shown in the examples and Table 1 have been measured and calculated under the conditions shown in the following.

### <Dynamic Viscoelasticity Testing Measurement>

Measurements were performed by the dynamic viscoelasticity testing method described in Method A of JIS K-7198 (corresponding to IS06721-4), using the viscoelasticity spectrorheometer "VES-F3" manufactured by Iwamoto Seisakusho K.K., at an oscillation frequency of 10 Hz, a distortion of 0.1%, temperatures of 20°C and 0°C, in the MD direction of a sheet.

### <ΔHm - ΔHc>

Measurements of heat upon heating a film at a heating rate of 10°C/minute, based on JIS K-7121 (corresponding to IS03146), were performed using a differential scanning calorimeter (DSC-7) manufactured by PerkinElmer, and calculations were performed from the difference of the amount of heat produced (ΔHc: J/g) concomitantly with crystallization and the amount of heat absorbed (ΔHm: J/g) concomitantly with crystal melting, from the obtained thermogram.

### <Tensile Stress Ratio (σMD/TD)>

Tensile tests were performed for the MD direction and the TD direction of a film, according to JIS K-7113, at a tensile velocity of 200 mm/minute, and calculations were performed by dividing the MD stress (Pa) by the TD stress (Pa).

### <Ability to Be Cut>

A film was wound around a paper tube, placed in a commercial carton provided with a saw blade, the film was pulled out from the carton, and the ability to be cut with a saw blade was evaluated.

The evaluation criteria were: circle for those films with a good ability to be cut, triangle for those that could be cut but with a somewhat poor ability to be cut, and cross for those where the ability to be cut was not good and the film stretched.

### <Heat Resistance>

Two tempura shrimps (length: on the order of 160 mm) were placed on a ceramic dish, which was then wrapped with a film, placed in a 500 W microwave oven, and heated for 3 minutes; tearing due to heating was observed and evaluated with the following criteria:

Circle: no hole formed.

Triangle: level where some holes are formed or deformations are observed, but posing no problem for use.

Cross: level where a large hole forms, or a large deformation is observed, posing problems for use.

### <Wrapping Suitability>

Wrapping suitability when a ceramic dish is wrapped by a film, was evaluated with the following criteria:

Circle: level allowing suitable wrapping.

Triangle: level where some wrinkles occur, but posing no problem for practical use.

Cross: level where the film does not line the shape of the container and spreads, posing problem for practical use.

**[Table 1]**

| | Composition | Storage Modulus | | | Peak Value of Loss Tangent | Loss Tangent 20°C | ΔHm-ΔHc J/g | Stress Ratio | Ability to be Cut | Heat Resistance | Wrapping Suitability | Bleed Acceleration Test |
|---|---|---|---|---|---|---|---|---|---|---|---|---|
| | | 20°C MPa | 40°C MPa | 100°C MPa | | | | | | | | |
| Reference Example 1 | NW4031/TEC=70/30 60°C×24 hours curing | 2060 | 1200 | 204 | 0.15 | 0.08 | 41 | 1.16 | ○ | ○ | △ | × |
| Reference Example 2 | NW4050/TEC=85/15 60°C×24 hours curing | 2020 | 774 | 125 | 0.2 | 0.13 | 32.3 | 1.18 | ○ | ○ | ○ | × |
| Reference Example 3 | NW4050/PX884=90/10 60°C×24 hours curing | 2400 | 1200 | 167 | 0.19 | 0.07 | 30.1 | 1.08 | ○ | ○ | △ | △ |
| Example 1 | NW4060/PX884=90/10 60°C×24 hours curing | 1990 | 747 | 88 | 0.24 | 0.12 | 21 | 1.09 | ○ | ○ | ○ | ○ |
| Example 2 | NW4060/PX884=85/15 60°C×24 hours curing | 1070 | 433 | 66 | 0.2 | 0.16 | 21 | 1.08 | ○ | ○ | ○ | ○ |
| Example 3 | NW4060/PX884=93/7 60°C×24 hours curing | 3250 | 1260 | 94 | 0.27 | 0.06 | 20 | 1.1 | ○ | ○ | △ | ○ |
| Reference Example 4 | NW4031/NW4050/TEC=50/50/40 60°C×24 hours curing | 1290 | 1930 | 250 | 0.2 | 0.16 | 32 | 1.02 | ○ | ○ | ○ | × |
| Reference Example 5 | NW4031/NW4050/NW4060/TEC=45/45/10/30 60°C×24 hours curing | 3100 | 1970 | 230 | 0.17 | 0.045 | 34 | 1.2 | ○ | ○ | △ | △ |
| Comparative Example 1 | NW4031/TEC=70/30 | 1920 | 21 | 110 | 2.6 | 0.15 | 5.1 | 1.02 | × | ○ | ○ | × |
| Comparative Example 2 | NW4060/PX884=90/10 | 2450 | 350 | | 3.1 | 0.052 | 0 | 1.08 | △ | × | ○ | ○ |
| Comparative Example 3 | NW4060/PX884=85/15 | 1990 | 11 | 13 | 2.3 | 0.15 | 0 | 1.03 | × | × | ○ | ○ |
| Comparative Example 4 | NW4060/PX884=93/7 | 2980 | 1620 | 20 | 1 | 0.03 | 0 | 1.05 | ○ | × | × | ○ |

### (Reference Example 1)

The lactic acid resin NatureWorks 4031D (molecular weight: 200,000), which is a poly(L-lactic acid) with a proportion of L-isomer:D-isomer = 99:1 manufactured by Cargill Dow, and 0.1 phr of aluminum stearate as lubricant were mixed, then melted and extruded at 190°C and 200 rpm using a 40 mmΦ mini co-rotating twin-screw extruder manufactured by Mitsubishi Heavy Industries Co., Ltd., while injecting from the vent opening 30 wt% in mass ratio of triethyl citrate as plasticizer (CITROFLEX 2 (TEC in the table); molecular weight: 270; SP value: 11.46 [fedors method]; manufactured by Morimura Bros., Inc.), and a 10 µm film was formed at a temperature of 200°C by the casting method, which was then cured at 60°C for 24 hours.

### (Reference Example 2)

The lactic acid resin NatureWorks 4050 (molecular weight: 200,000), which is a poly(DL-lactic acid) with a proportion of L-isomer:D-isomer = 95:5 manufactured by Cargill Dow, and 0.1 phr of aluminum stearate as lubricant were mixed, then melted and extruded at 190°C and 200 rpm using a 40 mmΦ mini co-rotating twin-screw extruder manufactured by Mitsubishi Heavy Industries Co., Ltd., while injecting from the vent opening 15 wt% in mass ratio of triethyl citrate as plasticizer (CITROFLEX 2 (TEC in the table); molecular weight: 270; SP value: 11.46 [fedors method]), and a 10 µm film was formed at a temperature of 200°C by the casting method, which was then cured at 60°C for 24 hours.

### (Reference Example 3)

The lactic acid resin NatureWorks 4050 (molecular weight: 200,000), which is a poly(DL-lactic acid) with a proportion of L-isomer:D-isomer = 95:5 manufactured by Cargill Dow, and 0.1 phr of aluminum stearate as lubricant were mixed, then melted and extruded at 190°C and 200 rpm using a 40 mmΦ mini co-rotating twin-screw extruder manufactured by Mitsubishi Heavy Industries Co., Ltd., while injecting from the vent opening 10 wt% in mass ratio of adipic acid ester (PX-884; molecular weight: 650; SP value: 11.3 [fedors method]; manufactured by Asahi Denka Co., Ltd.), and a 10 µm film was formed at a temperature of 200°C by the casting method, which was then cured at 60°C for 24 hours.

### (Example 1)

The lactic acid resin NatureWorks 4060 (molecular weight: 190,000), which is a poly(DL-lactic acid) with a proportion of L-isomer:D-isomer = 88:12 manufactured by Cargill Dow, and 0.1 phr of aluminum stearate as lubricant were mixed, then melted and extruded at 190°C and 200 rpm using a 40 mmΦ mini co-rotating twin-screw extruder manufactured by Mitsubishi Heavy Industries Co., Ltd., while injecting from the vent opening 10 wt% in mass ratio of adipic acid ester (PX-884; molecular weight: 650; SP value: 11.3 [fedors method]; manufactured by Asahi Denka Co., Ltd.), and a 10 µm film was formed at a temperature of 200°C by the casting method, which was then cured at 60°C for 24 hours.

### (Example 2)

The lactic acid resin NatureWorks 4060 (molecular weight: 190,000), which is a poly(DL-lactic acid) with a proportion of L-isomer:D-isomer = 88:12 manufactured by Cargill Dow, and 0.1 phr of aluminum stearate as lubricant were mixed, melted and extruded at 190°C and 200 rpm using a 40 mmΦ mini co-rotating twin-screw extruder manufactured by Mitsubishi Heavy Industries Co., Ltd., while injecting from the vent opening 15 wt% in mass ratio of adipic acid ester (PX-884; molecular weight: 650; SP value: 11.3 [fedors method]; manufactured by Asahi Denka Co., Ltd.), and a 10 µm film was formed at a temperature of 200°C by the casting method, which was then cured at 60°C for 24 hours.

### (Example 3)

The lactic acid resin NatureWorks 4060 (molecular weight: 190,000), which is a poly(DL-lactic acid) with a proportion of L-isomer:D-isomer = 88:12 manufactured by Cargill Dow, and 0.1 phr of aluminum stearate as lubricant were mixed, then melted and extruded at 190°C and 200 rpm using a 40 mmΦ mini co-rotating twin-screw extruder manufactured by Mitsubishi Heavy Industries Co., Ltd., while injecting from the vent opening 7 wt% in mass ratio of adipic acid ester (PX-884; molecular weight: 650; SP value: 11.3 [fedors method]; manufactured by Asahi Denka Co., Ltd.), and a 10 µm film was formed at a temperature of 200°C by the casting method, which was then cured at 60°C for 24 hours.

### (Reference Example 4)

The lactic acid resin NatureWorks 4031D (molecular weight: 200,000), which is a poly(L-lactic acid) with a proportion of L-isomer:D-isomer = 99:1 manufactured by Cargill Dow, and the lactic acid resin NatureWorks 4050 (molecular weight: 200,000), which is a poly(DL-lactic acid) with a proportion of L-isomer:D-isomer = 95:5 manufactured by Cargill Dow, were dry-blended at a proportion of 4031D:4050 = 50 wt%:50 wt%, mixed with 0.1 phr of aluminum stearate as lubricant, then melted and extruded at 190°C and 200 rpm using a 40 mmΦ mini co-rotating twin-screw extruder manufactured by Mitsubishi Heavy Industries Co., Ltd., while injecting from the vent opening 40 wt% in mass ratio of triethyl citrate as plasticizer (CITROFLEX 2 ; molecular weight: 270; SP value: 11.46 [fedors method]; manufactured by Morimura Bros., Inc.), and a 10 µm film was formed at a temperature of 200°C by the casting method, which was then cured at 60°C for 24 hours.

### (Reference Example 5)

The lactic acid resin NatureWorks 4031D (molecular weight: 200,000), which is a poly(L-lactic acid) with a proportion of L-isomer:D-isomer = 99:1 manufactured by Cargill Dow, the lactic acid resin NatureWorks 4050 (molecular weight: 200,000), which is a poly(DL-lactic acid) with a proportion of L-isomer:D-isomer = 95:5 manufactured by Cargill Dow, and the lactic acid resin NatureWorks 4060 (molecular weight: 190,000), which is a poly(DL-lactic acid) with a proportion of L-isomer:D-isomer = 88:12 manufactured by Cargill Dow, were dry-blended at a proportion of 4031D:4050:4060 = 45 wt%:45 wt%:10 wt%, mixed with 0.1 phr of aluminum stearate as lubricant, melted and extruded at 190°C and 200 rpm using a 40 mmΦ mini co-rotating twin-screw extruder manufactured by Mitsubishi Heavy Industries Co., Ltd., while injecting from the vent opening 30 wt% in mass ratio of triethyl citrate as plasticizer (CITROFLEX 2; molecular weight: 270; SP value: 11.46 [fedors method]; manufactured by Morimura Bros., Inc.), and a 10 µm film was formed at a temperature of 200°C by the casting method, which was then cured at 60°C for 24 hours.

### <Bleed Acceleration Test>

The following bleed acceleration test was performed for the films obtained in the above Examples 1 to 3 and Reference Examples 1 to 5. That is to say, a film with 10 cm in the MD direction and 10 cm in the TD direction, was left in an environment of 40°C and 40%RH for 30 days, and the presence or the absence of plasticizer rising onto the film surface was visually observed.

The result shows that Examples 1, 2 and 3, and Reference Examples 3 and 5 were better compared to Reference Examples 1, 2, and 7. Among these, Examples 1, 2 and 3 were particularly good without any identification of bleeding at all.

### (Comparative Example 1)

The lactic acid resin NatureWorks 4031D (molecular weight: 200,000), which is a poly(L-lactic acid) with a proportion of L-isomer:D-isomer = 99:1 manufactured by Cargill Dow, and 0.1 phr of aluminum stearate as lubricant were mixed, melted and extruded at 190°C and 200 rpm using a 40 mmΦ mini co-rotating twin-screw extruder manufactured by Mitsubishi Heavy Industries Co., Ltd., while injecting from the vent opening 30 wt% in mass ratio of triethyl citrate as plasticizer (CITROFLEX 2; molecular weight: 270; SP value: 11.46 [fedors method]; manufactured by Morimura Bros., Inc.), and a 10 µm film was formed at a temperature of 200°C by the casting method.

Although the degree of crystallinity was low, the elastic modulus at 40°C was a low 20.8 MPa, the ability to be cut was poor, and some holes opened in the heat-resistance evaluation, the film did not pose a problem for practical use.

### (Comparative Example 2)

The lactic acid resin NatureWorks 4060 (molecular weight: 190,000), which is a poly(DL-lactic acid) with a proportion of L-isomer:D-isomer = 88:12 manufactured by Cargill Dow, and 0.1 phr of aluminum stearate as lubricant were mixed, then melted and extruded at 190°C and 200 rpm using a 40 mmΦ mini co-rotating twin-screw extruder manufactured by Mitsubishi Heavy Industries Co., Ltd., while injecting from the vent opening 10 wt% in mass ratio of adipic acid ester (PX-884; molecular weight: 650; SP value: 11.3 [fedors method]; manufactured by Asahi Denka Co., Ltd.), and a 10 µm film was formed at a temperature of 200°C by the casting method.

For the present film, the elastic modulus at 40°C was 350 MPa, and the ability to be cut was somewhat poor, but at a level that posed not problem for practical use. However, as there was no crystallization at all, the elastic modulus at 100°C was 1 MPa or lower, and as a result, a large hole opened in the heat- resistance evaluation, and furthermore, the film stuck to the porcelain or the tempura.

### (Comparative Example 3)

The lactic acid resin NatureWorks 4060 (molecular weight: 190,000), which is a poly(DL-lactic acid) with a proportion of L-isomer:D-isomer = 88:12 manufactured by Cargill Dow, and 0.1 phr of aluminum stearate as lubricant were mixed, then melted and extruded at 190°C and 200 rpm using a 40 mmΦ mini co-rotating twin-screw extruder manufactured by Mitsubishi Heavy Industries Co., Ltd., while injecting from the vent opening 15 wt% in mass ratio of adipic acid ester (PX-884; molecular weight: 650; SP value: 11.3 [fedors method]; manufactured by Asahi Denka Co., Ltd.), and a 10 µm film was formed at a temperature of 200°C by the casting method.

For the present film, the elastic modulus at 40°C was a low of 11.6 MPa, and the film had a low ability to be cut; in addition, as there was no crystallization, the film had a low elastic modulus at 100°C of 12.9 MPa, and a large hole opened in the heat- resistance evaluation.

### (Comparative Example 4)

The lactic acid resin NatureWorks 4060 (molecular weight: 190,000), which is a poly(DL-lactic acid) with a proportion of L-isomer:D-isomer = 88:12 manufactured by Cargill Dow, and 0.1 phr of aluminum stearate as lubricant were mixed, then melted and extruded at 190°C and 200 rpm using a 40 mmΦ mini co-rotating twin-screw extruder manufactured by Mitsubishi Heavy Industries Co., Ltd., while injecting from the vent opening 7 wt% in mass ratio of adipic acid ester (PX-884; molecular weight: 650; SP value: 11.3 [fedors method]; manufactured by Asahi Denka Co., Ltd.), and a 10 µm film was formed at a temperature of 200°C by the casting method.

For the present film, elastic modulus at 40°C was a high of 1.6 GPa, and the ability to be cut was excellent. However, as there was no crystallization, the film had a low elastic modulus at 100°C of 19.6 MPa, and a large hole opened in the heat -resistance evaluation.

## Claims

1. A biodegradable wrap film comprising as a main component a lactic acid resin composition comprising:
a poly (DL-lactic acid) in which the proportion of L-isomer and D-isomer is 88:12 to 85:15 or 0:100 to 15:85, and a plasticizer, **characterized in that**
the value of the storage modulus at 40°C is in the range of 100 MPa to 3 GPa as measured at a frequency of 10 Hz and a distortion of 0.1% by the dynamic viscoelasticity testing method from Method A of JIS K-7198,
the value of the storage modulus at 100°C is in the range of 30 MPa to 500 MPa, and
the peak value of the loss tangent (tan δ) is in the range of 0.1 to 0.8.

2. The biodegradable wrap film as recited in Claim 1, **characterized in that**
the value of storage modulus at 20°C is in the range of 1 GPa to 4 GPa, as measured at a frequency of 10 Hz and a distortion of 0.1% by the dynamic viscoelasticity testing method from Method A of JIS K-7198, and the value of loss tangent (tan δ) at 20°C is 0.5 or less.

3. The biodegradable wrap film as recited in Claim 1 or 2, **characterized in that**
the value of storage modulus at 60°C is in the range of 100 MPa to 800 MPa as measured at a frequency of 10 Hz and a distortion of 0.1% by the dynamic viscoelasticity testing method from Method A of JIS K-7198.

4. The biodegradable wrap film as recited in any of Claims 1 to 3, **characterized in that**
the lactic acid resin composition comprises a lactic acid resin and a plasticizer in a proportion of 60: 40 to 99:1 by mass.

5. The biodegradable wrap film as recited in any of Claims 1 to 4, **characterized in that**
the difference (ΔHm - ΔHc) is 10 J/g or more between ΔHm, the heat of melting required to melt the crystals completely when heating the film according to JIS K-7121 at a heating rate of 10°C/minute using a differential scanning calorimeter, and ΔHc, the heat of crystallization produced concomitantly with crystallization during the heating.

6. The biodegradable wrap film as recited in any of Claims 1 to 5, **characterized in that**
the formed film is heated at a temperature between the glass transition temperature when heating according to JIS K-7121 at a heating rate of 10°C/minute using a differential scanning calorimeter, and the peak temperature of the heat of crystallization produced concomitantly with crystallization during the heating, and cured for 6 hours or longer.

## Patentansprüche

1. . Biologisch abbaubarer Verpackungsfilm, umfassend als Hauptkomponente eine Milchsäureharz-Zusammensetzung, welche umfasst:
eine Poly(DL-Milchsäure), bei der das Verhältnis von L-Isomer und D-Isomer 88:1 2 bis 85:15 oder 0;100 bis 15:85 beträgt, und
einen Weichmacher, **dadurch** charakterisiert, dass der Wert des Speichermoduls bei 40°C im Bereich von 100 MPa bis 3 GPa liegt, gemessen bei einer Frequenz von 10 Hz und einer Verformung von 0,1 % nach der dynamischen Viskoelastizitäts-Testmethode aus Methode A von JIS K-71 98,
der Wert des Speichermoduls bei 100°C im Bereich von 30 MPa bis 500 MPa liegt und
der Spitzenwert des Verlustfaktors (tan δ) im Bereich von 0,1 bis 0,8 liegt,

2. . Biologisch abbaubarer Verpackungsfilm wie in Anspruch 1 angegeben, **dadurch** charakterisiert, dass
der Wert des Speichermoduls bei 20°C im Bereich von 1 GPa bis 4 GPa liegt, gemessen bei einer Frequenz von 10 Hz und einer Verformung von 0,1 % nach der dynamischen Viskoelastizität-Testmethode aus Methode A von JIS K-71 98, und der Wert des Verlustfaktors (tan δ) bei 20°C 0,5 oder weniger ist,

3. . Biologisch abbaubarer Verpackungsfilm wie in Anspruch 1 oder 2 angegeben, **dadurch** charakterisiert, dass
der Wert des Speichermoduls bei 60°C im Bereich von 100 MPa bis 800 MPa liegt, gemessen bei einer Frequenz von 1 0 Hz und einer Verformung von 0,1 % nach der dynamischen Viskoelastizitäts-Methode aus Methode A von JIS K-7198,

4. . Biologisch abbaubarer Verpackungsfilm wie in einem der Ansprüche 1 bis 3 angegeben, **dadurch** charakterisiert, dass
die Milchsäureharz-Zusammensetzung ein Milchsäureharz und ein Weichmacher im Verhältnis von 60:40 bis 99;1 nach Gewicht umfasst.

5. . Biologisch abbaubarer Verpackungsfilm wie in einem der Ansprüche 1 bis 4 angegeben, **dadurch** charakterisiert, dass
die Differenz (ΔHm-ΔHc) zwischen ΔHm, der Schmelzwärme, die zum vollständigen Schmelzen der Kristalle erforderlich ist, wenn der Film entsprechend JIS K-71 21 mit einer Erwärmungsrate von 10°C/Minute unter Verwendung eines Differential-Scanning-Kalorimeters erwärmt wird, und ΔHc, der Kristallisationswärme, die gleichzeitig mit der Kristallisation während des Erwärmens gebildet wird, 10 J/g oder mehr beträgt.

6. . Biologisch abbaubarer Verpackungsfilm wie in einem der Ansprüche 1 bis 5 angegeben, **dadurch** charakterisiert, dass
der gebildete Film auf eine Temperatur zwischen der Glasübergangstemperatur beim Erwärmen entsprechend JIS K-7121 mit einer Erwärmungsrate von 10°C/Minute unter Verwendung eines Differential-Scanning-Kalorimeters und der Peak-Temperatur der Kristallisationswärme erhitzt wird, die gleichzeitig mit der Kristallisation während des Erwärmens gebildet wird, und während 6 Stunden oder mehr gehärtet wird,

## Revendications

1. Film d'emballage biodégradable comprenant, à titre de composant principal, une composition de résine d'acide lactique comprenant :
un acide poly-DL-lactique dans lequel la proportion de l'isomère L et de l'isomère D s'élève de 88:12 à 85:15 ou de 0:100 à 15:85, et
un plastifiant, **caractérisé en ce que** la valeur du module de conservation à 40 °C se situe dans la plage de 100 MPa à 3 GPa, telle qu'on la mesure à une fréquence de 10 Hz et à une déformation de 0,1 % par le procédé de mise à l'essai de la viscoélasticité dynamique selon le procédé A de la norme JIS K-7198 ;
la valeur du module de conservation à 100 °C se situe dans la plage de 30 MPa à 500 MPa ; et
la valeur maximale du facteur de pertes diélectriques (tan δ) se situe dans la plage de 0,1 à 0,8.

2. Film d'emballage biodégradable selon la revendication 1, **caractérisé en ce que**
la valeur du module de conservation à 20 °C se situe dans la plage de 1 GPa à 4 GPa, telle qu'on la mesure à une fréquence de 10 Hz et à une déformation de 0,1 % par le procédé de mise à l'essai de la viscoélasticité dynamique selon le procédé A de la norme JIS K-7198 ; et la valeur du facteur de pertes diélectriques (tan δ) à 20 °C s'élève 0,5 ou moins.

3. Film d'emballage biodégradable selon la revendication 1 ou 2, **caractérisé en ce que**
la valeur du module de conservation à 60 °C se situe dans la plage de 100 MPa à 800 MPa, telle qu'on la mesure à une fréquence de 10 Hz et à une déformation de 0,1 % par le procédé de mise à l'essai de la viscoélasticité dynamique selon le procédé A de la norme JIS K-7198.

4. Film d'emballage biodégradable selon l'une quelconque des revendications 1 à 3, **caractérisé en ce que**
la composition de résine d'acide lactique comprend une résine d'acide lactique et un plastifiant dans une proportion de 60:40 à 99:1 en masse.

5. Film d'emballage biodégradable selon l'une quelconque des revendications 1 à 4, **caractérisé en ce que**
la différence (ΔHm-ΔHc) s'élève à 10 J/g ou plus entre la valeur ΔHm, à savoir la chaleur de fusion requise pour la fusion complète des cristaux lorsqu'on chauffe le film conformément à la norme JIS K-7121 à une vitesse de chauffage de 10 °C/minute en utilisant un calorimètre à compensation de puissance, et la valeur ΔHc, à savoir la chaleur de cristallisation que l'on obtient de manière concomitante avec la cristallisation lors du chauffage.

6. Film d'emballage biodégradable selon l'une quelconque des revendications 1 à 5, **caractérisé en ce que**
le film obtenu est chauffé à une température entre la température de transition vitreuse, lorsqu'on le chauffe conformément à la norme JIS K-7121 à une vitesse de chauffage de 10 °C/minute en utilisant un calorimètre à compensation de puissance, et la température maximale de la chaleur de cristallisation que l'on obtient de manière concomitante avec la cristallisation lors du chauffage, et est durci pendant 6 heures ou plus.
